# EUROPEAN PATENT APPLICATION

(11) **EP 4 692 703 A1**
(43) Date of publication of application: **11.02.2026**
(21) Application number: 24778573.6
(22) Date of filing: 19.01.2024
(51) Int. Cl.: F26B 13/10, F26B 3/02, F26B 13/02

(54) **DRYING DEVICE**

(30) Priority: 29.03.2023 JP 2023053228; 22.12.2023 JP 2023217317
(71) Applicant: Toray Engineering Co., Ltd., Tokyo 103-0028 (JP)
(72) Inventor: FUJIMOTO, Takayoshi, Otsu-shi, Shiga 520-2141 (JP); MOTOI, Masashi, Otsu-shi, Shiga 520-2141 (JP)
(74) Representative: Global IP Europe Patentanwaltskanzlei
(86) International application number: PCT/JP2024/001381
(87) International publication number: WO 2024/202427

(57) **Abstract**

To provide a drying device that can reduce energy consumption when drying coating film compared to the prior art. Specifically, a drying device comprising a first drying unit and a second drying unit arranged side-by-side, each comprising a housing part inside of which a substrate having a coating film formed thereon passes and a supply unit that supplies gas into the housing part, and each heating to thereby dry the coating film in the housing part, wherein the first drying unit is provided with a supply unit that supplies gas into the housing part of the first drying unit and a first heat source that indirectly heats the coating film by heating the gas before the gas is supplied from the supply unit to the housing part, and the second drying unit is provided with a second heat source that directly heats the coating film in the housing part of the second drying unit.

## Description

### [TECHNICAL FIELD]

The present invention generally relates to a drying device for heating and drying a coating film formed on a substrate.

### [BACKGROUND ART]

In lithium ion batteries, a slurry of electrode material is applied to a sheet-like substrate such as aluminum foil or copper foil that is conveyed in a roll-to-roll process to form a coating film, and the coating film that has been formed is dried to form a positive or negative electrode. When forming a positive electrode, a slurry mainly containing N-methyl-pyrrolidone (NMP) is applied to the substrate. Then, drying of the coating film is carried out by heating the coating film to evaporate solvent, etc., contained in the coating film. When forming a positive electrode, NMP, which is the solvent, evaporates from the coating film.

As an example of a drying device that dries coating film, the following Patent Document 1 discloses a drying device comprising a housing part having an internal space through which a substrate passes, a heat source that heats gas, and a nozzle that supplies the gas heated by the heat source into the housing part. The drying device supplies the gas heated by the heat source into the housing part via the nozzle, thereby forming a high-temperature environment inside the housing part. By exposing the coating film on the substrate that is conveyed to this high-temperature environment for a set period of time, the solvent (NMP), etc., contained in the slurry is evaporated, thereby drying the coating film.

### [PRIOR ART DOCUMENT]

### [PATENT LITERATURE]

[Patent Literature 1] Japanese Laid-Open Patent Application Publication No. 2012-097917

### [SUMMARY OF THE INVENTION]

### [PROBLEM TO BE SOLVED BY THE INVENTION]

However, in the drying device described above, there is the problem that energy consumption becomes large when drying the coating film. That is, in the above-mentioned drying device, a large amount of gas is supplied into the housing part such that the concentration of NMP in the housing part does not exceed a reference value, in order to prevent the concentration of NMP that evaporates from the coating film when the coating film is heated in the housing part from exceeding the reference value and becoming a hazardous substance. Therefore, in order to maintain the temperature inside the housing part at a temperature necessary for drying the coating film, it is necessary to heat, with a heat source, the large amount of gas that is supplied to the housing part to dilute the NMP, resulting in large energy consumption.

The present invention was made in light of the above-described problem, an object of the present invention being to provide a drying device that can reduce energy consumption when drying coating film compared to the prior art.

### [MEANS TO SOLVE THE PROBLEM]

A drying device of the present invention for solving the problem described above is a drying device comprising a first drying unit and a second drying unit arranged side-by-side, each comprising a housing part inside of which a substrate having a coating film formed thereon passes and a supply unit that supplies gas into the housing part, and each heating to thereby dry the coating film in the housing part, wherein the first drying unit is provided with a supply unit that supplies gas into the housing part of the first drying unit and a first heat source that indirectly heats the coating film by heating the gas before the gas is supplied from the supply unit to the housing part, and the second drying unit is provided with a second heat source that directly heats the coating film in the housing part of the second drying unit.

The drying device described above is equipped with a first drying unit and a second drying unit. In the second drying unit, it is possible to directly heat, with the second heat source, the coating film formed on a substrate that passes inside the housing part, so that it becomes possible to heat the coating film without heating gas that is supplied into the housing part in order to dilute solvent that has evaporated from the coating film. As a result, it is possible to reduce energy consumption compared to when the coating film is heated and dried using only the first drying unit. Accordingly, it is possible to reduce the energy consumption when drying the coating film compared to the prior art.

In addition, the second drying unit may be disposed at a position at which the coating film is heated before the first drying unit.

According to this configuration, since the second drying unit, which directly heats the coating film using the second heat source without gas as a medium, carries out heating of the coating film before the first drying unit, which indirectly heats the coating film using the first heat source via gas, the temperature of the coating film can be rapidly increased by the second drying unit, after which the first drying unit can heat the coating film so as not to generate unevenness in the temperature in the coating film. As a result, it is possible to reduce the time required for drying the coating film, thereby reducing the energy consumption when drying the coating film and preventing uneven drying of the coating film.

In addition, the second heat source may irradiate infrared rays to heat the coating film.

According to this configuration, the coating film can be heated from both the surface and the inside, so that the temperature of the coating film can be rapidly increased. As a result, it becomes possible to reduce the time required for drying the coating film, thereby further reducing the energy consumption when drying the coating film.

In addition, the second heat source may be configured to have a first heating unit and a second heating unit that apply thermal energy to the coating film, and configured such that, in the second heating unit, the output of thermal energy applied to the coating film is adjusted to be lower than that of the first heating unit, and thermal energy is applied to the coating film after the first heating unit.

According to this configuration, the coating film is heated first by the first heating unit, after which the coating film is heated by the second heating unit whose output of thermal energy to be applied to the coating film is adjusted to be lower than that of the first heating unit. Therefore, it is possible to rapidly increase the temperature of the coating film while reducing the temperature difference between the surface and the interior of the coating film. As a result, it is possible to reduce the time required for drying the coating film while suppressing uneven drying of the coating film. In addition, since the coating film is heated by a plurality of heating units, i.e., the first and second heating units, heat can penetrate deeper into the coating film than when heating the coating film with one heating unit, thereby improving heat retention properties of the coating film after heating.

In addition, the second heating unit may be configured such that the range of the coating film where thermal energy is applied is set to be wider than in the first heating unit, in a drying process direction in which thermal energy is applied to the coating film in the order from the first heating unit to the second heating unit.

According to this configuration, it is possible to increase the time that the second heating unit causes heat to penetrate into the interior of the coating film, thereby further improving heat retention properties of the coating film after heating.

In addition, a plurality of the second heating units may be provided, each of which is arranged along the drying process direction.

According to this configuration, it is possible to increase the time that the second heating unit causes heat to penetrate into the interior of the coating film, thereby further improving heat retention properties of the coating film after heating.

In addition, the first drying unit may be provided with a discharge portion for discharging gas inside the housing part, and a heat exchange unit may be provided between the first drying unit and the second drying unit, the heat exchange unit exchanging heat between gas that is discharged via the discharge portion from inside the housing part of the first drying unit and gas that is supplied by the supply unit to the housing part of the second drying unit.

According to this configuration, the heat exchange unit exchanges heat between gas that is discharged via the discharge portion from the housing part of the first drying unit and gas that is supplied by the supply unit to the housing part of the second drying unit, so that it is possible to prevent the solvent that has evaporated from the coating film from being cooled and liquefied inside the housing part of the second drying unit. That is, it is possible for gas that was heated by the first heat source and that heated the coating film in the housing part of the first drying unit to heat the gas that is supplied by the supply unit to the housing part of the second drying unit. As a result, it is possible to maintain the temperature inside the housing part of the second drying unit at a higher temperature than room temperature without providing a first heat source in the second drying unit. As a result, it is possible to prevent the solvent that has evaporated from the coating film from being cooled and liquefied inside the housing part of the second drying unit, while suppressing energy consumption when drying the coating film.

In addition, the first drying unit may be provided with a discharge portion for discharging gas inside the housing part, and the supply unit may supply gas that is discharged via the discharge portion from inside the housing part of the first drying unit into the housing part of the second drying unit.

According to this configuration, gas that is discharged via the discharge portion from inside the housing part of the first drying unit is supplied by the supply unit into the housing part of the second drying unit, so that it is possible to prevent solvent that has evaporated from the coating film from being cooled and liquefied inside the housing part of the second drying unit. That is, high-temperature gas that was heated by the first heat source and that heated the coating film in the housing part of the first drying unit is supplied by the supply unit into the housing part of the second drying unit; therefore, it is possible to maintain the temperature inside the housing part of the second drying unit at a higher temperature than room temperature without providing a first heat source in the second drying unit. As a result, it is possible to prevent the solvent that has evaporated from the coating film from being cooled and liquefied inside the housing part of the second drying unit, while suppressing energy consumption when drying the coating film.

In addition, the pressure inside the housing part of the first drying unit may be set to lower than the pressure inside the housing part of the second drying unit.

According to this configuration, gas that is heated in the housing part of the second drying unit can by supplied into the housing part of the first drying unit, so that the supplied gas can be used to heat the coating film in the first drying unit as a part of hot air.

In addition, the coating film may be formed on both sides of the substrate, and the second heat source may be provided so as to be capable of heating each of the coating films formed on both sides of the substrate.

According to this configuration, even if coating film is formed on both sides of the substrate, it becomes possible for the second drying unit to heat the coating film formed on both sides of the substrate.

### [EFFECTS OF THE INVENTION]

According to the drying device of the present invention, it is possible to reduce the energy consumption when drying the coating film compared to the prior art.

### [BRIEF DESCRIPTION OF THE DRAWINGS]

[Figure 1] is a schematic diagram showing a drying device according to one embodiment of the present invention.
[Figure 2] is a diagram explaining a second drying unit provided in the drying device according to one embodiment of the present invention, where (a) shows a top view of a second heat source, and (b) shows a side view of the second heat source.
[Figure 3] is a diagram showing the relationship between the temperature of coating film and the content ratio of solvent contained in the coating film according to one embodiment of the present invention.
[Figure 4] is a diagram explaining the second drying unit provided in the drying device according to one embodiment of the present invention, showing an enlarged view of Figure 2.
[Figure 5] is a diagram showing one variation of the drying device according to one embodiment of the present invention.
[Figure 6] is a diagram showing one variation of the drying device according to one embodiment of the present invention.

### [EMBODIMENTS TO CARRY OUT THE INVENTION]

A drying device according to one embodiment of the present invention will be described, with reference to the drawings. In the following description, the three axes of a Cartesian coordinate system are X, Y, and Z, wherein the horizontal directions are referred to as the X-axis direction and the Y-axis direction, and the direction perpendicular to the XY plane (i.e., the vertical direction) is referred to as the Z-axis direction.

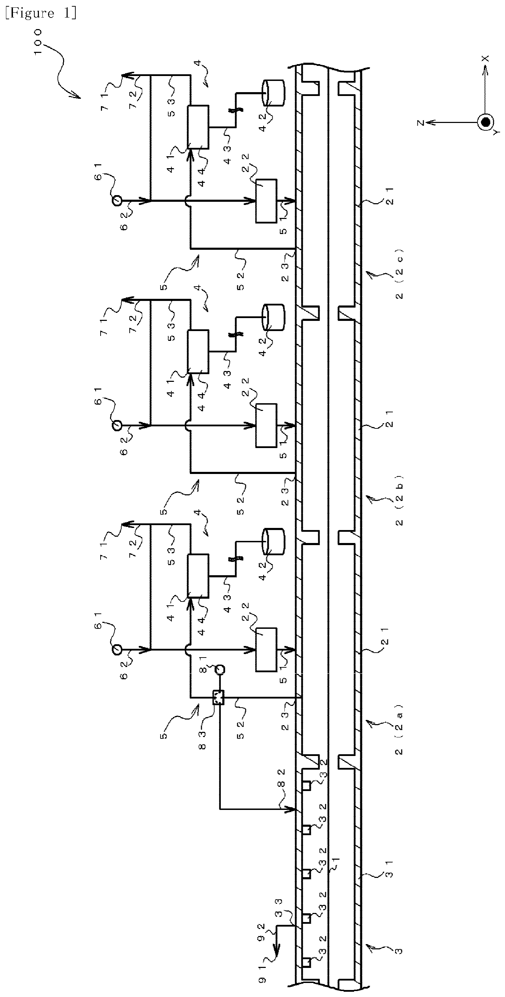

Figure 1 is a schematic diagram showing a drying device 100 according to the present embodiment.

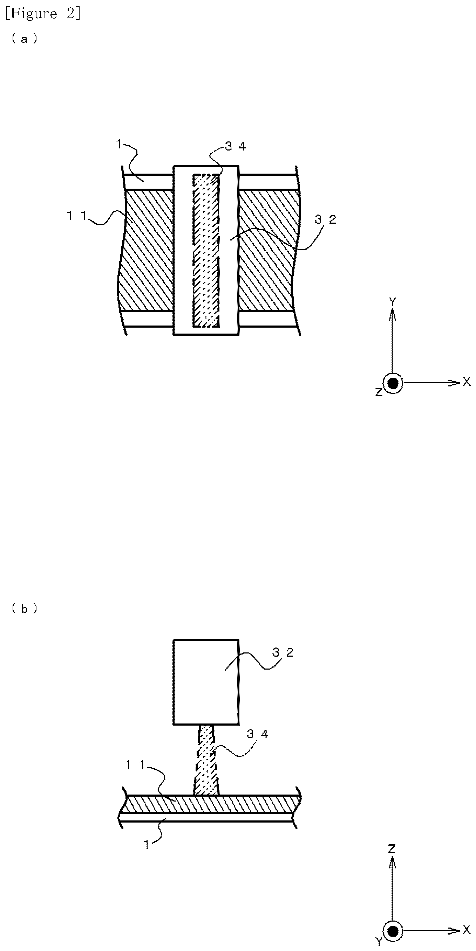

The drying device 100 of the present invention is for drying a coating film 11 (refer to Figures 2(a) and 2(b)) formed on a substrate 1 by an undiagrammed coating device, and comprises a first drying unit 2 and a second drying unit 3 that heat to thereby dry the coating film, as shown in Figure 1.

The coating device according to the present embodiment is for forming the coating film 11 on the substrate 1, and comprises an undiagrammed conveying section that conveys a strip-shaped substrate, and an undiagrammed coating unit that forms the coating film 11 by applying an electrode material slurry (hereinafter referred to as coating liquid) onto the substrate 1 being conveyed. Then, the coating device applies the coating liquid onto the substrate 1 being conveyed by the conveying section to form the coating film 11, and the drying device 100 heats and dries the coating film 11 formed on the substrate 1, thereby forming a positive electrode of a lithium ion battery.

A metal foil such as an aluminum foil that becomes a battery electrode plate of a lithium ion battery is used as the substrate 1. This substrate 1 is a strip-shaped sheet that is elongated in one direction, and is conveyed by the conveying section.

The coating liquid is, for example, a slurry obtained by mixing an active material, a binder, and a conductive assistant in a solvent such as N-methyl-pyrrolidone (NMP), and is used as a material (so-called electrode material) for battery electrode plates of lithium ion batteries. This coating liquid is applied onto the substrate 1 by the coating unit, thereby forming the coating film 11 on the substrate 1.

The first drying unit 2 will be described below.

The first drying unit 2 is for heating and drying the coating film 11 formed on the substrate 1. In the present embodiment, as shown in Figure 1, three of the first drying units 2 having the same structure are provided: first drying unit 2a, first drying unit 2b, and first drying unit 2c, arranged in order from the upstream side along the transport path of the substrate 1.s In the following description, when there is no need to distinguish between the three, the first drying unit 2a, the first drying unit 2b, and the first drying unit 2c are simply referred to as the first drying unit 2.

As shown in Figure 1, the first drying unit 2 has a housing part 21 having a space inside through which the substrate 1 passes, a first heat source 22 that heats gas to be supplied into the housing part 21, an undiagrammed nozzle that introduces the gas heated by the first heat source 22 into the housing part 21, and a first discharge portion 23 for discharging the gas from inside the housing part 21. The gas referred to here is air. The gas may be inert gas, such as N2 gas, He gas, or Ar gas.

As shown in Figure 1, the housing part 21 is a box formed to be long in the transport direction of the substrate 1, and is provided on substrate 1 transport path of the conveying section. This housing part 21 has a space inside through which the substrate 1 passes, and an entrance and an exit through which the substrate 1 enters and exits this space. As a result, the substrate 1 conveyed by the conveying section passes through inside the housing part 21. The first drying unit 2a, the first drying unit 2b, and the first drying unit 2c are arranged such that the respective housing parts 21 are connected to each other along the transport path of the substrate 1. As a result, the substrate 1 conveyed by the conveying section passes through each of the housing parts 21 of the first drying units 2 in succession.

The first heat source 22 is for indirectly heating the coating film 11 by heating gas that is supplied into the housing part 21. The first heat source 22 is a heater such as an electric heater or a heat medium heater, configured to heat gas to a prescribed temperature (temperature required to dry the coating film 11) before the gas is introduced by the nozzle into the housing part 21.

The gas that is heated by the first heat source 22 is introduced by the nozzle into the housing part 21 via a circulation path 51 (refer to Figure 1). As a result, a high-temperature environment is created inside the housing part 21. As a result of the substrate 1 conveyed by the conveying section passing through inside the housing part 21, the coating film 11 on the substrate 1 is heated, and solvent evaporates from the coating film 11. That is, the first heat source 22 applies thermal energy to the coating film 11 via the gas to heat the coating film 11 from the front surface.

The first discharge portion 23 is an opening through which the gas inside the housing part 21 is discharged to the outside of the housing part 11, and is formed on a wall portion of the housing part 21. Then, gas containing the solvent that has evaporated from the coating film 11 is discharged from the first discharge portion 23 to the outside of the housing part 21.

In addition, as shown in Figure 1, the first drying unit 2 is provided with a solvent recovery unit 4 that carries out a solvent recovery process on the gas discharged from the first discharge portion 23, and the circulation path 5 that circulates gas between the housing part 21 and the solvent recovery unit 4.

The solvent recovery unit 4 is for carrying out a process of liquefying and recovering the solvent that has evaporated from the coating film 11 in the housing part 21, and is provided so as to be attached to the housing part 21. As shown in Figure 1, the solvent recovery unit 4 in the present embodiment includes a cooling unit 41 that cools the gas containing the solvent that has evaporated from the coating film 11, a recovery unit 42 that stores the solvent that has liquefied by being cooled by the cooling unit 41, and a recovery path 43 that connects the cooling unit 41 and the recovery unit 42.

The cooling unit 41 is for cooling gas containing a solvent to liquefy the solvent. The cooling unit 41 is a cooler that uses a water-cooling method, and comprises a main body 44 having a cavity through which the gas flows and an undiagrammed refrigerant flow path through which water, serving as the refrigerant, flows.

The main body 44 is a housing having a cavity therein through which the gas flows, and is connected to the housing part 21 via the circulation path 5. As a result, the gas containing solvent that evaporated from the coating film inside the housing part 21 flows into the main body 44 via the circulation path 5.

The refrigerant flow path is a flow path through which the refrigerant flows, and is provided inside the main body 44. The refrigerant is caused to flow through this refrigerant flow path, thereby cooling the gas inside the main body 44 that flowed in from the housing part 21 via the circulation path 5. As a result, the solvent contained in the gas is liquefied.

The recovery unit 42 is for recovering solvent that is liquefied in the cooling unit 41, and is connected to the cooling unit 41 by a recovery path 43. The recovery path 43 is provided with an undiagrammed pump, and the pump feeds the solvent liquefied in the cooling unit 41 to the recovery unit 42 via the recovery path 43. As a result, the solvent is recovered by the recovery unit 42. Then, the gas from which the solvent has been recovered is discharged to the circulation path 5 from inside of the main body 44 of the cooling unit 41 as low-concentration gas in which the concentration of the solvent contained therein has bee reduced.

The circulation path 5 is for circulating gas between the first drying unit 2 and the solvent recovery unit 4. As shown in Figure 1, the circulation path 5 in the present embodiment is formed by a circulation path 51 that is connected so as to feed gas from the first heat source 22 to the housing part 21, a circulation path 52 that is connected so as to feed gas from the housing part 21 to the cooling unit 41, and a circulation path 53 that is connected so as to feed gas from the cooling unit 41 to the first heat source 22. In addition, fans for circulating the gas are provided at various locations in the circulation path 5. These fans circulate the gas from the first heat source 22 to the housing part 21, then to the cooling unit 41, then back to the first heat source 22, via the circulation path 5.

In addition, the first drying unit 2 is provided with a supply unit 61 that supplies the gas that is circulated by the circulation path 5. The supply unit 61 is a supply source for supplying, to the first drying unit 2, gas (hereinafter referred to as low-concentration gas) with a lower concentration of solvent contained therein than at least the solvent concentration contained in the gas from which the solvent has been recovered by the solvent recovery unit 4.

As shown in Figure 1, the supply unit 61 is connected to the circulation path 53 via a supply path 62 such that the low-concentration gas to be supplied can merge with the gas from which the solvent has been recovered by the solvent recovery unit 4 on the upstream side of the first heat source 22. An undiagrammed fan is provided in the supply path 62, and this fan supplies the low-concentration gas from the supply unit 61 to the circulation path 5 via the supply path 62. As a result, it is possible to decrease the solvent concentration contained in the gas that is circulated by the circulation path 5.

In addition, the supply unit 61 is configured to continue supplying an amount of gas that can sufficiently dilute the solvent during the operation of the drying device 100, in order to prevent the solvent concentration contained in the gas from exceeding a reference value causing the solvent to become a hazardous substance, in each of the first drying unit 2, the solvent recovery unit 4, and the circulation path 5. The reference value is the limit value at which the solvent explodes.

Gas that is obtained by merging the gas from which the solvent has been recovered by the solvent recovery unit 4 with the low-concentration gas supplied by the supply unit 61, and that is circulated by the circulation path 5, is heated by the first heat source 22 and introduced into the housing part 21 by the nozzle. That is, the gas for diluting the solvent is heated by the first heat source 22 and supplied into the housing part 21 as gas for heating the coating film 11. As a result, it is possible to heat the coating film 11 in the housing part 21 while preventing the solvent from becoming a hazardous substance in the housing part 21.

In addition, the first drying unit 2 is provided with an exhaust section 71 for exhausting, to the outside of the device, a part of the gas that is circulated by the circulation path 5. As shown in Figure 1, the exhaust section 71 is connected, via an exhaust path 72, to the circulation path 53 that feeds gas from the cooling unit 41 to the first heat source 22, on the upstream side of the position where the low-concentration gas is supplied by the supply unit 61. An undiagrammed fan is provided in the exhaust path 72, and this fan exhausts the gas flowing through the circulation path 53 to the outside of the device from the exhaust section 71 via the exhaust path 72, while adjusting the exhaust amount. As a result, a part of the gas from which the solvent has been recovered by the solvent recovery unit 4 is exhausted to the outside of the device.

The amount of gas that is exhausted from the exhaust section 71 is adjusted by the fan to be at least more than the amount of gas supplied by the supply unit 61. As a result, it is possible to create a negative pressure in the housing part 21 relative to the outside of the housing part 21, thereby preventing gas from leaking out of the housing part 21.

The second drying unit 3 will be described below. Note that detailed descriptions of configurations that are the same as those of the first drying unit 2 are omitted.

The second drying unit 3 is for heating and drying the coating film 11 formed on the substrate 1. As shown in Figure 1, the second drying unit 3 of the present embodiment comprises a housing part 31 inside of which the substrate 1 passes, a second heat source 32 that heats the coating film 11 in the housing part 31, and a second discharge portion 33. The housing part 31 and the second discharge portion 33 have the same configurations as the housing part 21 and the first discharge portion 23 provided in the first drying unit 2, so a detailed description thereof will be omitted.

The second heat source 32 is for directly heating the coating film 11 inside the housing part 31. The second heat source 32 is a laser light source that irradiates laser 34 (refer to Figures 2(a) and 2(b)), such as infrared laser.

As shown in Figure 1, a plurality of the second heat sources 32 are attached to the upper wall of the housing part 31 inside the housing part 31, and the plurality of second heat sources 32 are arranged along the transport path of the substrate 1 at prescribed intervals. As shown in Figure 2(b), each of the second heat sources 32 irradiates the laser 34 vertically downward.

Each of the second heat sources 32 comprises an undiagrammed transmitter that irradiates the laser 34 and an undiagrammed lens for shaping the laser 34 into a prescribed shape. As a result of the oscillator irradiating the lens with the laser 34, the laser 34 that is shaped into a prescribed shape is irradiated onto the coating film 11. The prescribed shape here means a shape that allows the laser 34 to be irradiated over the entire width of substrate 1, as shown in Figure 2(a). As a result, each of the second heat sources 32 irradiates the laser 34 over the entire width of the substrate 1. The substrate 1 is conveyed by the conveying section at a constant speed under the laser 34 that is irradiated over the entire width of the substrate 1 by each of the heat sources 32, thereby uniformly heating the entire coating film 11.

In this manner, the second heat source 32 directly heats the coating film 11 without gas as a medium by irradiating the laser 34 onto the coating film 11. Therefore, it is possible to increase the thermal energy transmitted to the coating film 11 compared to transmitting thermal energy to the coating film 11 via a gas, as is the case with the first heat source 22. As a result, the second heat source 32 can more rapidly increase the temperature of the coating film 11 than when heating the coating film 11 with the first heat source 22.

In addition, the laser 34 irradiated by the second heat source 32 penetrates into the interior of the coating film 11, is absorbed by the coating film 11, and converted into thermal energy. That is, the second heat source 32 can heat the coating film 11 from the inside. As a result, since the second heat source 32 can heat the coating film 11 from the inside, it is possible to more rapidly increase the temperature of the coating film 11 than when heating the coating film 11 from the front surface, as is the case with the first heat source 22.

In addition, since the second heat source 32 can directly heat the coating film 11 without gas as a medium, it becomes possible to heat the coating film 11 without heating the gas for diluting solvent that has evaporated from the coating film 11, as is the case with the first heat source 22. As a result, the energy consumption when the coating film 11 is heated by the second heat source 32 is lower than the energy consumption when the coating film 11 is heated by the first heat source 22.

On the other hand, the first heat source 22 heats gas, and the gas creates a high-temperature environment inside the housing part 21 thereby heating the coating film 11, so that the coating film 11 can be heated from a plurality of directions. That is, the coating film 11 can also be heated from the back surface side of the substrate 1. As a result, even if sagging or misalignment occurs in the substrate 1 during transport of the substrate 1 by a conveying mechanism, it is possible to apply thermal energy to the coating film 11 from a plurality of directions. As a result, unevenness in the temperature of the coating film 11 is less likely to occur when the coating film 11 is heated by the first heat source 22, compared to heating the coating film 11 from one direction, as is the case with the second heat source 32.

In addition, the second drying unit 3 is provided with a supply unit 81 that supplies gas into the housing part 31. The supply unit 81 is a supply source for supplying gas, and is connected to the housing part 31 via a supply path 82, as shown in Figure 1. An undiagrammed fan is provided in the supply path 82, and this fan supplies gas from the supply unit 81 to the inside of the housing part 31 via the supply path 82.

Here, as shown in Figure 1, the drying device 100 is provided with a heat exchange unit 83 that exchanges heat between gas that is discharged from inside the housing part 21 of the first drying unit 2 via the first discharge portion 23 and gas that is supplied by the supply unit 81 to the housing part 31 of the second drying unit 3. In the present embodiment, the circulation path 52 and the supply path 82 intersect inside the heat exchange unit 83, and heat exchange is carried out between the gas that flows through the supply path 82 and the gas that is discharged from inside the housing part 21 via the first discharge portion 23 of the first drying unit 2 and flows through the circulation path 52.

That is, the heat exchange unit 83 uses gas that has been heated by the first heat source 22 and that heated the coating film 11 in the housing part 21 of the first drying unit 2 to heat the gas that is supplied by the supply unit 81 to the housing part 31 of the second drying unit 2. As a result, it is possible to maintain the temperature inside the housing part 31 of the second drying unit 3 at a higher temperature than room temperature without providing the first heat source 21 in the second drying unit 3. As a result, it is possible to prevent solvent that has evaporated from the coating film 11 from being cooled and liquefied inside the housing part 31 of the second drying unit 3, while suppressing energy consumption when drying the coating film 11. Note that a temperature higher than room temperature means a temperature of about 40 to 60°C.

In addition, the second drying unit 3 is provided with an exhaust section 91 that exhausts a part of the gas inside the housing part 31 to the outside of the device. As shown in Figure 1, the exhaust section 91 is connected to the second discharge portion 33 of the housing part 31 via an exhaust path 92. An undiagrammed fan is provided in the exhaust path 92, and this fan exhausts the gas inside the housing part 31 to the outside of the device from the exhaust section 91 via the exhaust path 92, while adjusting the exhaust amount. As a result, it is possible to exhaust the solvent that has evaporated from the coating film 11 inside the housing part 31 to the outside of the device together with the gas, thereby preventing the solvent that has evaporated from the coating film 11 from remaining within the housing part 31.

The amount of gas that is exhausted from the exhaust section 91 is adjusted by the fan to be at least more than the amount of gas supplied by the supply unit 81. As a result, it is possible to create a negative pressure in the housing part 31 relative to the outside of the housing part 31, thereby preventing gas from leaking out of the housing part 31.

In addition, to control the progress of the drying of the coating film 11, the the drying device 100 divides the drying step of the coating film 11 by the first drying unit 2 and the second drying unit 3 into an early drying stage, an intermediate drying stage, and a late drying stage, and manages the temperature of the coating film 11 for each range.

Here, in the present embodiment, the second drying unit 3 carries out drying of the coating film 11 in the early drying stage. That is, as shown in Figure 1, the housing part 31 of the second drying unit 3 is provided so as to be connected to the housing part 21 of the first drying unit 2a so that the second drying unit 3 is located upstream of the first drying unit 2, and so that the second drying unit 3 heats the coating film 11 before the first drying unit 2. The first drying unit 2 is configured to carry out drying of the coating film 11 in the intermediate and late drying stages.

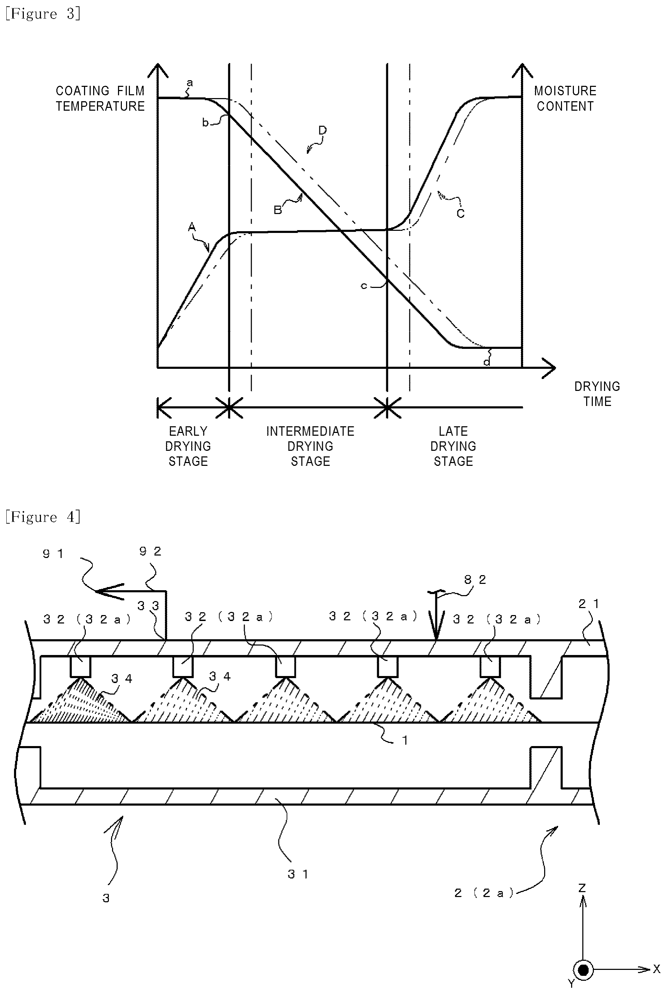

A specific explanation will be given using Figure 3. Figure 3 is a diagram showing the relationship between the temperature of the coating film 11 and the content ratio of the solvent contained in the coating film 11 in the present embodiment. Solid lines A and B indicate cases in which heating of the coating film 11 is carried out using the drying device 100 of the present embodiment, and dashed lines C and D indicate cases in which heating of the coating film 11 is carried out using only the first drying unit 2 as in a conventional drying device.

The early drying stage is the range in which the coating film 11 is preheated from room temperature to a prescribed temperature, and, as indicated by the solid line B in Figure 3, the content ratio of the solvent in the coating film 11 is almost constant at content ratio a. That is, the early drying stage is a range in which solvent hardly evaporates from the coating film 11.

Here, in the present embodiment, the second drying unit 3 carries out heating of the coating film 11 in the early drying stage. That is, since the coating film 11 is heated in the early drying stage with the second heat source 32, which can more rapidly increase the temperature of the coating film 11 than the first heat source 22, the temperature of the coating film 11 can be more rapidly increased than in the prior art, as indicated by the solid line A and the dashed line C in Figure 3, and it is possible to reduce the time required to heat the coating film 11 to the prescribed temperature.

In addition, since the solvent hardly evaporates from the coating film 11 in the early drying stage, it is not necessary for the second drying unit 3, which heats the coating film 11 in the early drying stage, to supply a large amount of gas for diluting the solvent into the housing part 31. In addition, since the coating film 11 can be directly heated by the second heat source 32 in the second drying unit 3, it is not necessary to supply gas for heating the coating film 11 to the housing part 31, as is the case with the first drying unit 2. Therefore, in the present embodiment, it is sufficient for the supply unit 81 to supply only a small amount of gas used for ventilating the interior of the housing part 31 of the second drying unit 3, so that the amount of gas used when drying the coating film 11 is greatly reduced compared to a conventional drying device. As a result, it is possible to reduce the energy consumption when drying the coating film 11 compared to the prior art.

The intermediate drying stage is a range in which the temperature of the coating film 11 is kept substantially constant, or gradually increased, to advance the drying of the coating film 11. Here, in the present embodiment, the first drying unit 2 carries out heating of the coating film 11 in the intermediate drying stage. That is, since the coating film 11 is heated in the intermediate drying stage with the first heat source 22, which can better suppress an occurrence of unevenness in the temperature of the coating film 11 than the second heat source 32, it becomes easier to heat the coating film 11 to a substantially constant temperature, as indicated by the solid line A in Figure 3. As a result, the solvent can be caused to evaporate from the coating film 11 at a constant rate such that the content ratio of the solvent in the coating film 11 transitions from content ratio b to content ratio c as indicated by the solid line B in Figure 3. Therefore, it is possible to advance the drying of the coating film 11 in a controlled manner so as not to excessively dry the coating film 11.

The late drying stage is a range in which the coating film 11 is dried by increasing the temperature of the coating film 11 again. Here, in the present embodiment, the first drying unit 2 carries out heating of the coating film 11 in the intermediate drying stage. That is, since the coating film 11 is heated in the late drying stage with the first heat source 22, which can better suppress an occurrence of unevenness in the temperature of the coating film 11 than the second heat source 32, the solvent can be caused to evaporate from the coating film 11 at a constant rate such that the content ratio in the coating film 11 transitions from content ratio c to content ratio d as indicated by the solid line B in Figure 3, and the coating film 11 can be heated while adjusting the temperature of the coating film 11 so as not to excessively dry the coating film 11. As a result, the coating film 11 can be dried without generating unevenness in the drying of the coating film 11.

In this manner, in the drying device 100 of the present embodiment, since the second heat source 32 heats the coating film 11 in the early drying stage, the time required to heat the coating film 11 to a prescribed temperature becomes shorter than in a conventional drying device, as indicated by the solid line A and the dashed line C in Figure 3, and the time required for drying the coating film 11 can be shortened as indicated by the solid line B and the dashed line D in Figure 3. As a result, it is possible to reduce the energy consumption when drying the coating film 11 compared to the prior art. Then, the first heat source 22 heats the coating film 11 in the intermediate drying stage and the late drying stage, so that it is possible to suppress segregation of the binder in the coating film 11 during heating, thereby preventing deformation of the coating film 11. That is, in the drying device 100 according to the present embodiment, it is possible to reduce the time required for drying the coating film to reduce the time required for drying the coating film 11, while preventing deformation of the coating film 11.

Here, the second drying unit 3 in the present embodiment is purposely not provided with the solvent recovery unit 4. Specifically, the second drying unit 3 in the present embodiment heats the coating film 11 during the early drying stage when solvent is less likely to evaporate from the coating film 11 and recovery of solvent is not required. Therefore, the second drying unit 3 is not provided with the solvent recovery unit 4. As a result, the cost of installing equipment as well as the running cost for operating the equipment are reduced compared to a case in which the solvent recovery unit 4 is provided in all of the first drying units 2 and the second drying units 3.

In addition, as shown in Figure 4, the second heat source 32 has a first heating unit 32a that irradiates the coating film 11 with the laser 34, and a second heating unit 32b that irradiates the coating film 11 with the laser 34 that is adjusted to have a lower output than the first heating unit 32a, and in the present embodiment, of the plurality of second heat sources 32, the second heat source 32 that heats the coating film 11 first is designated as the first heating unit 32a, and the second heat sources 32 that are arranged along the transport direction of the substrate 1 so as to heat the coating film 11 after the first heating unit 32a are designated as the second heating units 32b. That is, the second drying unit 3 in the present embodiment is configured to heat the coating film 11 with the second heating units 32b in which the laser 34 to be irradiated is adjusted to have a lower output than in the first heating unit 32a, after the coating film 11 is first heated by the first heating unit 32a in which the laser 34 to be irradiated is adjusted to have a higher output than in the second heating units 32b. As a result, it is possible to reduce the time required for drying the coating film 11 while suppressing uneven drying of the coating film.

A specific explanation will be given. If the second drying unit 3 only had the first heating unit 32a in which the output of the laser 34 to be irradiated is adjusted to be high, and a plurality of the first heating units 32a were arranged along the transport direction of the substrate 1 to heat the coating film 11 with each of the first heating units 32a, although it would be possible to rapidly increase the temperature of the coating film 11 and reduce the time required to dry the coating film 11, the temperature of the surface of the coating film 11 would increase more rapidly than the temperature of the interior of the coating film 11 and the temperature difference between the surface and the interior of the coating film 11 would become large, which may lead to uneven drying of the coating film 11.

In contrast, the second drying unit 3 in the present embodiment heats the coating film 11 with the second heating units 32b in which the laser 34 to be irradiated is adjusted to have a lower output than in the first heating unit 32a after the coating film 11 is first heated by the first heating unit 32a, so that the temperature of the surface of the coating film 11 can be increased more gradually than when heating the coating film 11 with only the first heating unit 32a. As a result, it is possible to rapidly increase the temperature of the coating film 11 while reducing the temperature difference that occurs between the surface and the interior of the coating film 11. Accordingly, it is possible to reduce the time required for drying the coating film 11 while suppressing uneven drying of the coating film 11.

In addition, in the second drying unit 3, the coating film 11 is heated in succession by a plurality of the second heat sources 32, that is, by the first heating unit 32a and the second heating units 32b, so that the time required for drying the coating film 11 can be further shortened. Specifically, the temperature inside the housing part 31 does not become very high other than the irradiation range of the laser 34 irradiated by the second heat source 32, so that there may be cases in which the temperature of the coating film 11 decreases between the irradiation range of the laser 34 of the second heat source 32 in the housing part 31 and the point at which the coating film 11 is heated in the subsequent housing part 21. In contrast, in the drying unit 3 according to the present embodiment, the coating film 11 is heated in succession by the first heating unit 32a and the second heating units 32b, so that heat can penetrate into the interior of coating film 11, thereby improving the heat retention properties of the coating film 11 after heating. As a result, it is possible to prevent a decrease in the temperature of the coating film 11 between when the coating film 11 is heated by the second drying unit 3 and when the coating film 11 is heated by the first drying unit 2, so that the time required for drying the coating film 11 can be further shortened.

In addition, the second heating unit 32b in the present embodiment is set to irradiate the laser 34 such that the irradiation range of the laser 34 in the transport direction of the substrate 1 is wider than in the first heating unit 32a. As shown in Figure 4, in the present embodiment, more of the second heating units 32b are provided than the first heating unit 32a, and the second heating units 32b are arranged along the transport direction of the substrate 1. As a result, the irradiation range of the laser 34 irradiated by the second heating units 32b in the transport direction of the substrate 1 is wider than that irradiated by the first heating unit 32a. In this manner, by expanding the irradiation range of the laser 34 irradiated by the second heating unit 32b, it is possible to increase the time that the second heating unit 32b causes heat to penetrate into the interior of the coating film 11, thereby further improving the heat retention properties of the coating film 11 after heating.

In addition, in the second drying unit 3 of the present embodiment, the first heating unit 32a and the second heating unit 32b are arranged such that gaps are not generated between the laser 34 respectively irradiated by the first heating unit 32a and the second heating unit 32b in the transport direction of the substrate 1. As a result, the heat retention properties of the coating film 11 after heating can be improved compared to when there is a gap between the laser 34 respectively irradiated by the first heating unit 32a and the second heating unit 32b, and the laser 34 is respectively irradiated by the first heating unit 32a and the second heating unit 32b.

In addition, of the plurality of second heating units 32b, the second heating unit 32b that is the last to heat the coating film 11 is provided so as to be able to irradiate the laser 34 onto the coating film 11 located in the vicinity of the side wall on the exit side of the housing part 31, and the laser 34 irradiated by the second heating unit 32b is preferably irradiated such that the distance between the end of the irradiation range of the laser 34 irradiated by the second heating unit 32b and the side wall on the exit side of the housing part 31 is as short as possible, within a range where the laser 34 irradiated by the second heating unit 32b does not irradiate the inner wall of the housing part 31. As a result, since the time between the heating of the coating film 11 by the second drying unit 3 and the heating of the coating film 11 by the first drying unit 2 can be shortened, it becomes easier to prevent a decrease in the temperature of the coating film 11 between when the coating film 11 is heated by the second drying unit 3 and when the coating film 11 is heated by the first drying unit 2.

In this manner, according to the drying device 100 of the present embodiment, since the second heat source 32 can directly heat the coating film 11 formed on the substrate 1 that passes inside the housing part 31 of the second drying unit 3, it becomes possible to heat the coating film 11 without heating gas that is supplied into the housing part 11 to dilute solvent that has evaporated from the coating film 11. As a result, it is possible to reduce the energy consumption when drying the coating film 11 compared to the prior art.

In addition, since the second drying unit 3 heats the coating film 11 before the first drying unit 2, the coating film 11 can be directly heated by the second heat source 32 at a position where the solvent is less likely to evaporate from the coating film 11. As a result, the second drying unit 3 can heat the coating film 11 while reducing the amount of gas that is supplied into the housing part 31 to dilute solvent that has evaporated from the coating film 11. As a result, it is possible to reduce the energy consumption when drying the coating film 11.

An embodiment of the present invention was described in detail above with reference to the drawings, but the configurations in the embodiment and combinations thereof are merely examples, and additions, omissions, substitutions, and other modifications can be made without departing from the scope of the invention. For example, in the embodiment described above, an example was described in which the coating film 11 is heated by the second heat source 32 irradiating laser thereon, but the invention is not limited thereto, as long as a heat source can apply thermal energy to the coating film 11 to directly heat the coating film. For example, the second heat source 32 may irradiate microwaves to heat the coating film 11, or the second heat source 32 may heat the coating film 11 by an infrared heater, by an infrared lamp, by induction heating, or by dielectric heating.

In addition, in the embodiment described above, an example was described in which the second drying unit 3 heats the coating film 11 in the early drying stage, but the second drying unit 3 may carry out heating in another range. In this case, it is necessary to provide the solvent recovery unit 4 in the second drying unit 3 to recover the solvent that has evaporated from the coating film 11. Even if the solvent recovery unit 4 is provided in the second drying unit 3, the second drying unit 3 can directly heat the coating film 11 with the second heat source 32 without heating gas that circulates in the circulation path 5 as in the first drying unit 2, so that the energy consumption when heating the coating film 11 can be reduced compared to the prior art.

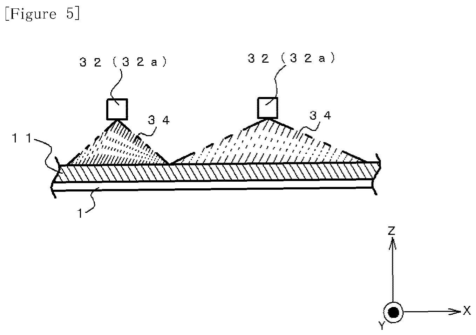

In addition, in Figure 4, an example is shown in which the second heat source 32 has one first heating unit 32a and four second heating units 32b, but the invention is not limited thereto. In addition, in the embodiment described above, an example was described in which more of the second heating units 32b are provided than the first heating unit 32a, and the second heating units 32b are arranged along the transport direction of the substrate 1, and, as a result, the irradiation range of the laser 34 irradiated by the second heating units 32b in the transport direction of the substrate 1 is wider than that irradiated by the first heating unit 32a, but the invention is not limited thereto. For example, as shown in Figure 5, the second heating unit 32b may be configured to irradiate the laser 34 by setting the irradiation range of the laser 34 irradiated by each of the second heating units 32b in the transport direction of the substrate 1 to be wider than the irradiation range of the laser 34 irradiated by the first heating unit 32a. In this case, even if the number of the first heating units 32a and the number of the second heating units 32b provided in the second heat source 32 are the same, it is possible make the irradiation range of the laser 34 irradiated by the second heating unit 32b wider than that of the first heating unit 32a in the transport direction of the substrate 1, in the same manner as in the above-mentioned embodiment.

In addition, in the embodiment described above, an example was described in which the second heat source 32 has the first heating unit 32a and the second heating unit 32b, but the invention is not limited thereto. For example, second heat sources 32 in which the output of the laser 34 to be irradiated has been adjusted such that uneven drying of the coating film 11 does not occur may be arranged along the transport direction of the substrate 1 to heat the coating film 11.

Additionally, in the embodiment described above, an example was described in which the second drying unit 3 has the housing part 31, but the housing part 31 may be excluded. In addition, gas that contains solvent that has been heated by the second drying unit 3 and has evaporated from the coating film 11 may be supplied from the entrance of the housing part 21 disposed at a position closest to the second drying unit 3. Specifically, when the second drying unit 3 comprises the housing part 31, the pressure inside the housing part 21 is set lower than the pressure inside the housing part 31, to thereby supply the gas inside the housing part 31 into the housing part 21. In addition, when the second drying unit 3 does not comprise the housing part 31, the pressure inside the housing part 21 is set lower than the pressure outside the housing part 21 in the vicinity of the entrance of the housing part 21, to thereby supply, into the housing part 21, the gas present in the vicinity of the entrance of the housing part 31. As a result, gas whose temperature increased when the coating film 11 was heated by the second drying unit 3 can be supplied into the housing part 21 and used to heat the coating film 11 inside the housing part 21. In addition, since the solvent that has been heated by the second drying unit 3 and has evaporated from the coating film 11 can be supplied from inside the housing part 31 into the housing part 21, it is possible to suppress an increase in the solvent concentration inside the housing part 31. As a result, it becomes easier to prevent the solvent remaining in the housing part 31 from inhibiting the heating of the coating film 11 by the second heat source 32.

In addition, in the embodiment described above, an example was described in which only the second heat source 32 is provided in the second drying unit 3, but both the first heat source 22 and the second heat source 32 may be provided.

Additionally, in the embodiment described above, an example was described in which the drying device 100 includes only one of the second drying unit 3, but the drying device 100 may include a plurality of the second drying units 3.

In addition, in the embodiment described above, an example was described in which the second heat source 32 has a plurality of the second heat sources 32, but the number of the second heat sources 32 may be one. In this case, the output of the laser irradiated by the second heat source 32 is increased to heat the coating film 11.

Additionally, in the embodiment described above, an example was described in which one of coating film 11 is formed by a coating unit in the width direction of the substrate 1, but a plurality of the coating films 11 may be formed by the coating unit such that there is a set interval between each of the coating films 11 formed along the width direction of the substrate 1. Even in this case, in the drying device 100 according to the present embodiment, the second heat source 32 can irradiate the laser 34 over the entire width of the substrate 1, thereby heating the plurality of the coating films 11. In addition, the same number of the second heat sources 32 may be provided as the number of the coating films 11 formed on the substrate 1 and arranged along the width direction of the substrate 1, and each of the second heat sources 32 may be used to individually heat the coating films 11.

In addition, in the embodiment described above, an example was described in which the coating film 11 is formed by the coating unit on one side of the substrate 1, but the coating unit may form the coating film 11 on both sides of the substrate 1. In this case, the second drying unit 3 is configured to heat the coating film 11 formed on both sides of the substrate 1. That is, the second heat source 32 is provided such that the laser 34 is irradiated on each of the coating films 11 formed on both sides of the substrate 1. For example, the second heat source 32 may be attached to each of the upper and lower walls of the housing part 31 inside the housing part 31.

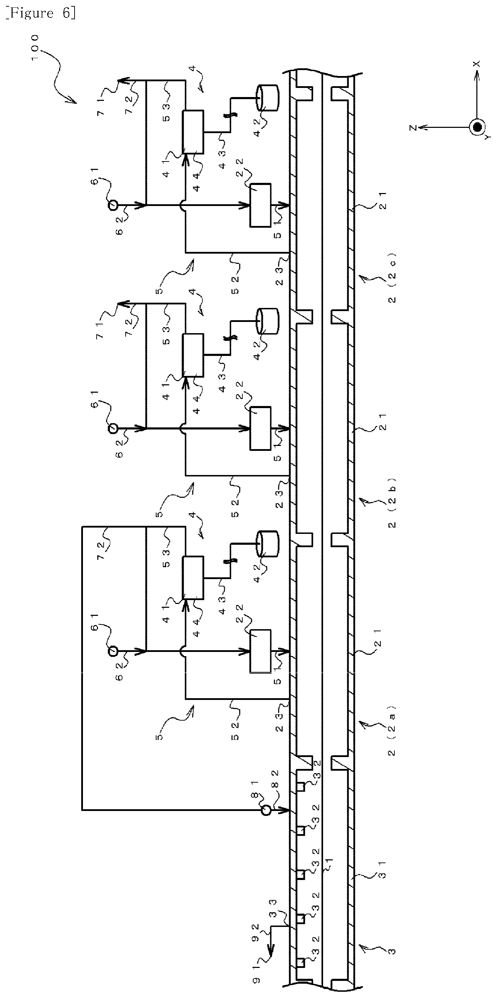

In addition, in the embodiment described above, an example was described in which the heat exchange unit 83 maintains the temperature inside the housing part 31 of the second drying unit 3 at or above room temperature, but the invention is not limited thereto. For example, as shown in Figure 6, the supply unit 81 may be configured to supply gas discharged via the first discharge portion 23 from inside the housing part 21 of the first drying unit 2 into the housing part 31 of the second drying unit 3. Specifically, as shown in Figure 6, the supply unit 81 and the exhaust path 72 are connected, and low-concentration gas that is heated by the first heat source 22 in the first drying unit 2, discharged from inside the housing part 21 via the first discharge portion 23 after heating the coating film 11 inside the housing part 21, and from which solvent has been recovered by the solvent recovery unit 4, is supplied into the housing part 31 via the exhaust path 72, the supply unit 81, and the supply path 82.

That is, high-temperature gas that has been heated by the first heat source 22 and that heated the coating film 11 in the housing part 21 is supplied by the supply unit 81 to the housing part 31; therefore, it is possible to maintain the temperature inside the housing part 31 at a higher temperature than room temperature without providing the first heat source 12 in the second drying unit 3. As a result, it is possible to prevent solvent that has evaporated from the coating film 11 from being cooled and liquefied inside the housing part 31 of the second drying unit 3, while suppressing energy consumption when drying the coating film 11. Note that it is not necessary for the solvent recovery unit 4 to recover the solvent if the concentration of the solvent contained in the gas is less than or equal to a reference value inside the housing part 21 of the first drying unit 2 which discharges the gas to be supplied by the supply unit 81 to the housing part 31 of the second drying unit 3. That is, the gas discharged via the first discharge portion 23 from inside the housing part 21 of the first drying unit 2 may be directly supplied into the housing part 31 of the second drying unit 3.

It is also not necessary to provide the heat exchange unit 83. In this case, atmospheric gas may be directly supplied into the housing part 31 of the second drying unit 3. That is, roomtemperature gas may be supplied into the housing part 31 of the second drying unit 3.

In addition, in the embodiment described above, an example was described in which the solvent contained in the coating liquid is NMP, but the solvent may be water.

### [DESCRIPTIONS OF THE REFERENCE SYMBOLS]

- 100: Drying device
- 1: Substrate
- 11: Coating film
- 2: First drying unit
- 2a: First drying unit
- 2b: First drying unit
- 2c: First drying unit
- 21: Housing part
- 22: First heat source
- 23: First discharge portion
- 3: Second drying unit
- 31: Housing part
- 32: Second heat source
- 32a: First heating unit
- 32b: Second heating unit
- 33: Second discharge portion
- 34: Laser
- 4: Solvent recovery unit
- 41: Cooling unit
- 42: Recovery unit
- 43: Recovery path
- 44: Main body
- 5: Circulation path
- 51: Circulation path
- 52: Circulation path
- 53: Circulation path
- 61: Supply unit
- 62: Supply path
- 71: Exhaust section
- 72: Exhaust path
- 81: Supply unit
- 82: Supply path
- 83: Heat exchange unit
- 91: Exhaust section
- 92: Exhaust path

## Claims

1. A drying device comprising a first drying unit and a second drying unit arranged side-by-side, each comprising a housing part inside of which a substrate having a coating film formed thereon passes and a supply unit that supplies gas into the housing part, and each heating to thereby dry the coating film in the housing part, wherein
the first drying unit is provided with a supply unit that supplies gas into the housing part of the first drying unit and a first heat source that indirectly heats the coating film by heating the gas before the gas is supplied from the supply unit to the housing part, and
the second drying unit is provided with a second heat source that directly heats the coating film in the housing part.

2. The drying device according to claim 1, wherein
the second drying unit is disposed at a position at which the coating film is heated before the first drying unit.

3. The drying device according to claim 1 or 2, wherein
the second heat source irradiates infrared rays to heat the coating film.

4. The drying device according to claim 1 or 2, wherein
the second heat source has a first heating unit and a second heating unit that apply thermal energy to the coating film, and
in the second heating unit, the output of thermal energy applied to the coating film is adjusted to be lower than that of the first heating unit, and thermal energy is applied to the coating film after the first heating unit.

5. The drying device according to claim 4, wherein,
in the second heating unit, the range of the coating film where thermal energy is applied is set to be wider than in the first heating unit, in a drying process direction in which thermal energy is applied to the coating film in the order from the first heating unit to the second heating unit.

6. The drying device according to claim 5, wherein
a plurality of the second heating units are provided, each of which is arranged along the drying process direction.

7. The drying device according to claim 1 or 2, wherein
the first drying unit is provided with a discharge portion for discharging gas inside the housing part, and
a heat exchange unit is provided between the first drying unit and the second drying unit, the heat exchange unit exchanging heat between gas that is discharged via the discharge portion from inside the housing part of the first drying unit and gas that is supplied by the supply unit to the housing part of the second drying unit.

8. The drying device according to claim 1 or 2, wherein
the first drying unit is provided with a discharge portion for discharging gas inside the housing part, and
the supply unit supplies gas that is discharged via the discharge portion from the housing part of the first drying unit into the housing part of the second drying unit.

9. The drying device according to claim 1 or 2, wherein
the pressure inside the housing part of the first drying unit is set to be lower than the pressure inside the housing part of the second drying unit.

10. The drying device according to claim 1 or 2, wherein
a coating film is formed on both sides of a substrate, and
a second heat source is provided so as to be capable of heating each of the coating films formed on both sides of the substrate.
